# FASCICULE DE BREVET EUROPEEN

(11) **EP 3 782 244 B1**
(45) Date de publication et mention de la délivrance du brevet: **06.03.2024**
(21) Numéro de dépôt: 19718708.1
(22) Date de dépôt: 19.04.2019
(51) Int. Cl.: H01S 3/00, G02F 1/35, G02F 1/355

(54) **PROCEDE DE GENERATION D'IMPULSIONS ULTRACOURTES**
VERFAHREN ZUR ERZEUGUNG ULTRAKURZER IMPULSE
METHOD FOR GENERATING ULTRASHORT PULSES

(30) Priorité: 20.04.2018 FR 1853519
(43) Date de publication de la demande: 24.02.2021
(73) Titulaire: Ecole Polytechnique, 91120 Palaiseau (FR); Centre National de la Recherche Scientifique, 75016 Paris (FR); Université Paris-Saclay, 91190 Saint-Aubin (FR)
(72) Inventeur: PAPADOPOULOS, Dimitrios, 92160 Antony (FR); DELEN, Xavier, 92160 Antony (FR); DRUON, Frédéric, 91400 Orsay (FR)
(74) Mandataire: IPAZ
(86) Numéro de dépôt international: PCT/EP2019/060227
(87) Numéro de publication internationale: WO 2019/202145

(56) Documents cités:
- EP-A2- 0 409 660
- US-A- 5 015 054
- US-A1- 2008 085 123
- US-B1- 6 298 180
- HIROHISA KANBARA ET AL: "Highly efficient ultrafast optical Kerr shutters with the use of organic nonlinear materials", JOURNAL OF THE OPTICAL SOCIETY OF AMERICA - B., vol. 11, no. 11, 1 novembre 1994 (1994-11-01), page 2216, XP055538171, US ISSN: 0740-3224, DOI: 10.1364/JOSAB.11.002216
- ZHANG Q F ET AL: "Ultrafast optical Kerr effect of Ag-BaO composite thin films", APPLIED PHYSICS LETTERS, A I P PUBLISHING LLC, US, vol. 82, no. 6, 10 février 2003 (2003-02-10), pages 958-960, XP012034766, ISSN: 0003-6951, DOI: 10.1063/1.1541092

## Description

La présente invention concerne les procédés de génération d'impulsions ultracourtes et les installations pour la mise en oeuvre de ces procédés.

### Etat de la technique

Il est connu de générer des impulsions ultracourtes à l'aide d'installations reposant sur une technologie d'amplification paramétrique optique d'impulsions à dérive de fréquence (encore appelée OPCPA, pour « Optical Parametric Chirped-Pulse Amplification » en anglais). Ces amplificateurs OPCPA comportent un cristal non-linéaire assurant le transfert d'énergie entre une impulsion d'un faisceau pompe fortement énergétique et une impulsion d'un faisceau signal à spectre large, étirée temporellement et peu énergétique. Avant d'être amplifiée, un étireur permet d'étirer temporellement l'impulsion ultracourte du faisceau signal de manière à abaisser sa puissance crête. Pour qu'il y ait amplification paramétrique, les impulsions des faisceaux pompe et signal doivent être superposées temporellement dans le cristal. L'amplificateur OPCPA est donc associé à une synchronisation temporelle des sources lasers générant les faisceaux pompe et signal. Un compresseur optique permet de recomprimer l'impulsion du faisceau signal.

Afin que les impulsions des faisceaux pompe et signal soient superposées temporellement dans le cristal, il est connu d'utiliser deux sources lasers indépendantes à verrouillage de modes synchronisées électroniquement, l'une des sources lasers étant un oscillateur Titane Saphir (TiS) générant les impulsions ultracourtes du faisceau signal. Toutefois, la synchronisation électronique entraine des dérives de phase à long terme dues à la dérive thermique et au bruit de phase.

Une alternative consiste en ce que les deux sources lasers indépendantes soient synchronisées optiquement. Ce type de synchronisation présente toutefois une mise en oeuvre complexe et un manque de fiabilité à long terme.

Une autre solution consiste à utiliser une seule et même source laser, un oscillateur TiS à très large bande spectrale, permettant à la fois la génération des impulsions du faisceau pompe et les impulsions du faisceau signal. Cependant, les oscillateurs TiS présentent un coût relativement élevé et une mise en oeuvre complexe, en plus de nécessiter une importante maintenance. Par ailleurs, ces oscillateurs nécessitent des configurations complexes d'amplification, notamment multi-étages et volumineuses, associées à des étireurs et compresseurs très sensibles et longs, ce qui contribue à des problèmes de stabilité des impulsions générées, en particulier pour les amplificateurs OPCPA fonctionnant dans le régime de quelques picosecondes (ps-OPCPA) qui nécessitent une synchronisation très stricte (<100 fs) entre les impulsions des faisceaux pompe et signal pour garantir une haute stabilité spectrale du signal amplifié.

Une autre limitation de la technologie OPCPA est liée à sa source de pompage, notamment sa fiabilité à long terme. L'efficacité des amplificateurs ps-OPCPA est par ailleurs limitée par la capacité réduite de mise en forme d'impulsions optimisées dans le régime picosecondes.

Il est fait référence aux documents suivants :
HIROHISA KANBARA ET AL: "Highly efficient ultrafast optical Kerr shutters with the use of organic nonlinear materials", JOURNAL OF THE OPTICAL SOCIETY OF AMERICA - B., vol. 11, no. 11, 1 novembre 1994, page 2216-2223;
ZHANG Q F ET AL: "Ultrafast optical Kerr effect of Ag-BaO composite thin films", APPLIED PHYSICS LETTERS, A I P PUBLISHING LLC, US, vol. 82, no. 6, 10 février 2003, pages 958-960;
EP 0 409 660 A2, 23 janvier 1991;
US 6 298 180 B1, 2 octobre 2001;
US 2008/085123 A1, 10 avril 2008;
US 5 015 054 A, 14 mai 1991.

Il demeure un besoin pour perfectionner encore les procédés de génération d'impulsions ultracourtes, et notamment pour améliorer la synchronisation temporelle entre deux sources lasers indépendantes.

### Résumé de l'invention

La présente invention est divulguée dans les revendications indépendantes. Des modes de réalisation préférentiels sont divulgués dans les revendications dépendantes.

La présente invention vise à perfectionner les procédés de génération d'impulsions ultracourtes et notamment à remédier à tout ou partie des inconvénients ci-dessus. Elle y parvient grâce à un procédé de génération d'impulsions ultracourtes, dans lequel :
- on dirige à travers un matériau de porte optique un faisceau maître présentant des impulsions ultracourtes et au moins un faisceau esclave, l'intensité du faisceau esclave en amont du matériau de porte optique étant plus faible que celle du faisceau maître en amont du matériau de porte optique, le matériau de porte optique et les impulsions du faisceau maître étant choisis de telle sorte à induire un effet Kerr lors de la traversée du matériau de porte optique par le faisceau maître, l'effet Kerr produisant une modulation de la phase du faisceau esclave en lien avec les impulsions du faisceau maître lors de la traversée du matériau de porte optique par le faisceau esclave, et
- on transforme la modulation de la phase du faisceau esclave en une modulation de l'amplitude de celui-ci à l'aide d'un dispositif optique complémentaire, de façon à générer un faisceau esclave en aval du matériau de porte optique présentant des impulsions ultracourtes, de sorte que les impulsions ultracourtes du faisceau esclave générées en aval du matériau de porte optique et les impulsions du faisceau maître en aval du matériau de porte optique se superposent temporellement, la précision de cette synchronisation temporelle étant de préférence inférieure ou égale à 20 fs, et
- on utilise le faisceau maître en aval du matériau de porte optique comme faisceau signal d'un amplificateurs OPCPA et on utilise le faisceau esclave en aval du matériau de porte optique comme faisceau de pompe pour ledit amplificateur OPCPA.

Par « impulsions ultracourtes », il faut comprendre des impulsions dont la durée est comprise entre 5 femtosecondes (fs) et 100 picosecondes (ps).

Le procédé selon l'invention présente l'avantage d'offrir une solution robuste présentant une fiabilité à long terme pour la génération d'impulsions ultracourtes.

L'invention peut être mise en oeuvre directement dans des systèmes déjà opérationnels sans modifications majeures, ce qui peut permettre de réduire le coût et la complexité de son implémentation.

Le matériau de porte optique présente des propriétés non linéaires.

Le matériau de porte optique peut être tout matériau transparent, minéral, organique ou composite. Le matériau de porte optique peut être un solide tel qu'un verre ou un cristal, un gaz, un liquide, et se présenter le cas échéant sous la forme d'un guide d'onde, tel qu'un capillaire de silice fondue ou une fibre optique.

Le matériau de porte optique est par exemple un verre SF54 ou SF14.

Le faisceau esclave en amont du matériau de porte optique peut être continu ou impulsionnel. Il est de préférence impulsionnel.

L'intensité d'un faisceau laser est définie comme étant la puissance de crête par unité de surface.

L'intensité du faisceau maître est suffisante pour induire un effet Kerr lors de la traversée du matériau de porte optique par le faisceau maître et pour que cet effet Kerr produise une modulation de la phase du faisceau esclave en lien avec les impulsions du faisceau maître lors de la traversée du matériau de porte optique par le faisceau esclave. La modulation de la phase du faisceau esclave dépend de la non-linéarité du matériau utilisé en tant que porte optique et de sa longueur. L'intensité du faisceau maître est de préférence telle que la valeur de l'intégrale B (B-integral ou B-int) est comprise entre 1 et π, avec B-int = (2πL / λ) * 1 * n2, où L est la longueur du matériau de porte optique, λ la longueur d'onde centrale du faisceau maître, 1 l'intensité du faisceau maître et n2 l'indice de réfraction non linéaire du matériau de porte optique.

L'intensité du faisceau esclave en amont du matériau de porte optique est plus faible que celle du faisceau maître en amont du matériau de porte optique.

L'intensité du faisceau esclave en amont du matériau de porte optique est par exemple inférieure d'un facteur d'au moins 10 à l'intensité du faisceau maître en amont du matériau de porte optique.

Les impulsions des faisceaux maître et esclave en amont du matériau de porte optique peuvent se superposer temporellement, cette superposition étant de préférence obtenue au moyen d'une synchronisation électronique. La synchronisation électronique peut être réalisée au moyen d'un détecteur et d'un générateur de signal optique.

La synchronisation électronique peut assurer une précision inférieure ou égale à 500 ps, mieux inférieure ou égale à 100 ps, et encore mieux inférieure ou égale à 10 ps.

Les faisceaux maître et esclave peuvent présenter des longueurs d'onde centrales respectives différentes. Ces longueurs d'onde centrales peuvent être choisies de manière arbitraire. Le faisceau maître a par exemple une longueur d'onde centrale centrée sur 800 nm. Le faisceau esclave a par exemple une longueur d'onde centrale centrée sur 1064 nm.

Les impulsions des faisceaux maître et esclave en amont du matériau de porte optique peuvent présenter des durées différentes.

La durée d'une impulsion est définie comme étant la largeur du pic à -3 dB.

Les impulsions du faisceau esclave en amont du matériau de porte optique peuvent présenter une durée supérieure à celle des impulsions du faisceau maître en amont du matériau de porte optique.

La durée des impulsions ultracourtes du faisceau esclave générées en aval du matériau de porte optique peut être identique ou proche de la durée des impulsions du faisceau maître.

La durée des impulsions du faisceau maître et la durée des impulsions ultracourtes du faisceau esclave générées en aval du matériau de porte optique peut être comprise entre 5 fs et 100 ps.

Les paramètres de sortie des impulsions ultracourtes du faisceau esclave générées en aval du matériau de porte optique, tels que leur durée et leur forme temporelle, peuvent être variables. Par exemple, il est possible d'ajuster l'étirement du faisceau maître pour jouer sur la durée de l'impulsion ultracourte générée ou de filtrer spectralement le faisceau maître pour jouer sur la forme de l'impulsion ultracourte générée.

La modulation de la phase du faisceau esclave par les impulsions du faisceau maître lors de la traversée du matériau de porte optique par le faisceau esclave peut être instantanée ou s'effectuer avec un retard inférieur ou égal à 20 fs, mieux inférieur ou égal à 10 fs, et encore mieux inférieur ou égal à 5 fs. Ce retard peut dépendre de la nature exacte du matériau utilisé en tant que porte optique.

La modulation de la phase du faisceau esclave par effet Kerr peut s'accompagner d'une modulation de sa polarisation à la traversée du matériau de porte optique par le faisceau esclave lorsque les faisceaux maître et esclave en entrée du matériau de porte optique sont polarisés différemment, et le dispositif optique complémentaire peut comporter des moyens d'ajustement de l'état de polarisation du faisceau esclave en amont du matériau de porte optique et un polariseur aval en aval du matériau de porte optique, croisé avec la polarisation du faisceau esclave en entrée du matériau de porte optique, pour bloquer la partie non modulée en polarisation du faisceau esclave.

Par « polarisés différemment », il faut comprendre que les faisceaux maître et esclave en entrée du matériau de porte optique présentent des directions de polarisation différentes.

Par exemple, les faisceaux maître et esclave en entrée du matériau de porte optique sont polarisés linéairement et différemment, la polarisation du faisceau maître par rapport à la polarisation du faisceau esclave étant différente de 90° en valeur absolue.

Les moyens d'ajustement de l'état de polarisation du faisceau esclave en amont du matériau de porte optique peuvent comporter un polariseur et/ou une lame biréfringente.

Dans une variante, le dispositif optique complémentaire comporte un interféromètre configuré pour faire interférer au moins un faisceau esclave ayant traversé le matériau de porte optique avec au moins un autre faisceau issu de la même source que le faisceau esclave afin de produire une modulation d'amplitude du faisceau esclave.

L'interféromètre peut être un interféromètre de Sagnac dans lequel le faisceau esclave est séparé en deux faisceaux se propageant dans des directions opposées à travers le matériau de porte optique et recombinés après traversée de celui-ci. L'utilisation d'un interféromètre de Sagnac présente l'avantage d'une grande stabilité.

Dans une variante, la modulation de la phase du faisceau esclave par effet Kerr peut s'accompagner d'une modulation de sa divergence à la traversée du matériau de porte optique par le faisceau esclave en présence d'un gradient spatial, notamment radial, d'intensité du faisceau maître au sein du matériau de porte optique, et le dispositif optique complémentaire peut comporter un filtre spatial en aval du matériau de porte optique pour bloquer la partie non modulée en divergence du faisceau esclave.

Le faisceau esclave, après traversée du matériau de porte optique, peut être amplifié au sein d'un amplificateur laser.

Les impulsions ultracourtes du faisceau esclave générées en aval du matériau de porte optique et les impulsions du faisceau maître en aval du matériau de porte optique peuvent se superposer temporellement. La précision de cette synchronisation temporelle peut être comparable au retard de la réponse non linéaire du matériau de porte optique, i.e. comparable au retard avec lequel est effectué la modulation de la phase du faisceau esclave par les impulsions du faisceau maître lors de la traversée du matériau de porte optique par le faisceau esclave. La précision de cette synchronisation temporelle peut être inférieure ou égale à 20 fs, mieux inférieure ou égale à 10 fs, et encore mieux inférieure ou égale à 5 fs.

L'invention a encore pour objet, selon un autre de ses aspects une installation pour générer des impulsions ultracourtes, notamment pour la mise en oeuvre du procédé selon l'invention tel que défini ci-dessus, comportant :
- une première source laser configurée pour générer un faisceau maître présentant des impulsions ultracourtes,
- au moins une deuxième source laser configurée pour générer au moins un faisceau esclave,
- un matériau de porte optique disposé sur le trajet des faisceaux maître et esclave, le matériau de porte optique et les impulsions du faisceau maître étant choisis de telle sorte à induire un effet Kerr lors de la traversée du matériau de porte optique par le faisceau maître, l'effet Kerr produisant une modulation de la phase du faisceau esclave en lien avec les impulsions du faisceau maître lors de la traversée du matériau de porte optique par le faisceau esclave,
- un dispositif optique complémentaire pour transformer la modulation de la phase du faisceau esclave en une modulation de l'amplitude de celui-ci, de sorte que les impulsions ultracourtes du faisceau esclave générées en aval du matériau de porte optique et les impulsions du faisceau maître en aval du matériau de porte optique se superposent temporellement, la précision de cette synchronisation temporelle étant de préférence inférieure ou égale à 20 fs,
- un amplificateurs OPCPA configuré pour utiliser comme faisceau signal le faisceau maître en aval du matériau de porte optique et comme faisceau pompe le faisceau esclave en aval du matériau de porte optique.

Les première et deuxième sources laser peuvent être indépendantes.

La première source laser peut être de type femtoseconde, picoseconde.

La deuxième source laser peut être de type SLM (Single Longitudinal Mode) et/ou oscillateur déclenché (Q-switch), ou peut être une source modulée en gain.

L'installation selon l'invention peut comporter des moyens pour diriger les faisceaux maître et esclave à travers le matériau de porte optique. L'installation comporte par exemple un miroir, notamment dichroïque ou courbé, une lentille et/ou un masque de phase.

L'installation peut comporter des moyens d'amplification optique pour amplifier le faisceau esclave en aval du matériau de porte optique. L'installation comporte par exemple un amplificateur à fibre optique ou à cristaux massifs.

La modulation de la phase du faisceau esclave par effet Kerr peut s'accompagner d'une modulation de sa polarisation à la traversée du matériau de porte optique par le faisceau esclave lorsque les faisceaux maître et esclave en entrée du matériau de porte optique sont polarisés différemment, et le dispositif optique complémentaire peut comporter des moyens d'ajustement de l'état de polarisation du faisceau esclave en amont du matériau de porte optique et un polariseur aval en aval du matériau de porte optique, croisé avec la polarisation du faisceau esclave en entrée du matériau de porte optique, pour bloquer la partie non modulée en polarisation du faisceau esclave.

Par exemple, les faisceaux maître et esclave en entrée du matériau de porte optique sont polarisés linéairement et différemment, la polarisation du faisceau maître par rapport à la polarisation du faisceau esclave étant différente de 90° en valeur absolue.

Dans une variante, le dispositif optique complémentaire comporte un interféromètre configuré pour faire interférer au moins un faisceau esclave ayant traversé le matériau de porte optique avec au moins un autre faisceau issu de la même source que le faisceau esclave afin de produire une modulation d'amplitude du faisceau esclave.

L'interféromètre peut être comme mentionné ci-dessus un interféromètre de Sagnac dans lequel le faisceau esclave est séparé en deux faisceaux se propageant dans des directions opposées à travers le matériau de porte optique et recombinés après traversée de celui-ci.

Dans une autre variante, la modulation de la phase du faisceau esclave par effet Kerr peut s'accompagner d'une modulation de sa divergence à la traversée du matériau de porte optique par le faisceau esclave en présence d'un gradient spatial, notamment radial, d'intensité du faisceau maître au sein du matériau de porte optique, et le dispositif optique complémentaire peut comporter un filtre spatial en aval du matériau de porte optique pour bloquer la partie non modulée en divergence du faisceau esclave.

L'invention pourra être mieux comprise à la lecture de la description détaillée qui va suivre, d'un exemple de mise en oeuvre non limitatif de celle-ci, et à l'examen du dessin annexé, sur lequel :
- la figure 1 représente de façon schématique un amplificateur OPCPA selon l'art antérieur, et
- les figures 2 à 4 représentent de façon schématique des exemples d'installations selon l'invention.

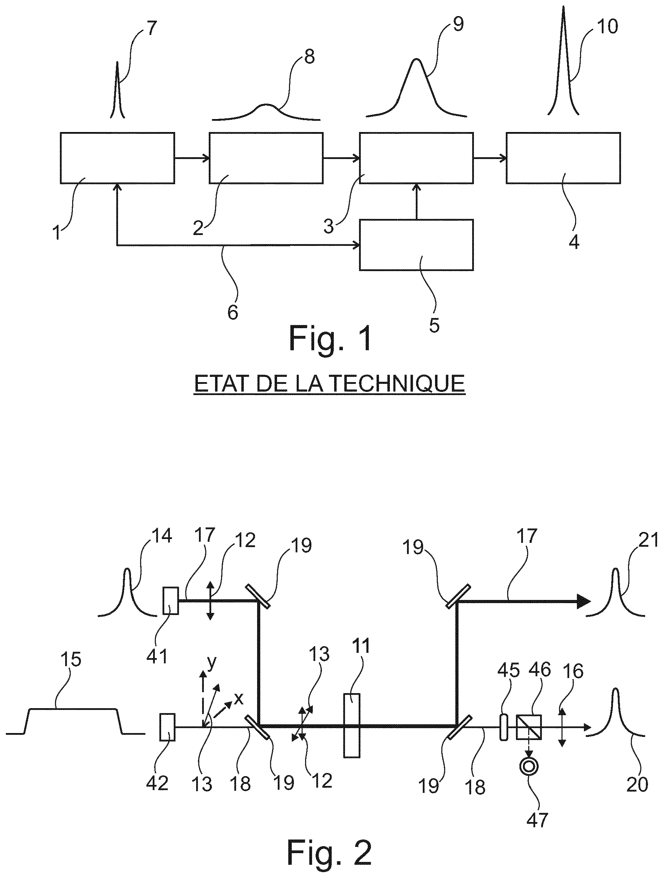

On a représenté à la figure 1 un schéma d'un amplificateur OPCPA selon l'art antérieur. Une source pompe 5 génère un faisceau pompe présentant une impulsion fortement énergétique. Une source signal 1 génère un faisceau signal présentant une impulsion ultracourte 7 peu énergétique, qui est étirée temporellement à l'aide d'un étireur 2 de manière à obtenir une impulsion étirée 8 présentant une puissance crête abaissée. Un système de synchronisation temporelle 6 permet de synchroniser la source pompe 5 et la source signal 1. Un amplificateur paramétrique optique 3 comporte un milieu non linéaire permettant un transfert d'énergie entre l'impulsion du faisceau pompe et l'impulsion étirée 8 du faisceau signal de manière à obtenir une impulsion amplifiée 9 du faisceau signal qui est recomprimée jusqu'à idéalement sa durée initiale à l'aide d'un compresseur 4 de manière à obtenir une impulsion 10 du faisceau signal de puissance crête très élevée.

On a représenté à la figure 2 un exemple d'installation selon l'invention comportant, en amont d'un matériau de porte optique 11, une première source laser 41 générant une impulsion 14 d'un faisceau maître 17 et une deuxième source laser 42 générant une impulsion 15 d'un faisceau esclave 18.

En variante, le faisceau maître 17 correspond à une partie ou à la totalité du faisceau signal généré par la source signal 1 de l'amplificateur OPCPA représenté à la figure 1.

Les faisceaux maître 17 et esclave 18 sont polarisés linéairement en amont du matériau de porte optique 11, et leur état, i.e. leur direction, de polarisation est différent l'un de l'autre en excluant le cas où la polarisation du faisceau maître par rapport à la polarisation du faisceau esclave est de 90° en valeur absolue. Les faisceaux maître 17 et esclave 18 sont par exemple polarisés à 45° l'un de l'autre, comme illustré par les flèches 12 et 13 qui renseignent sur l'état de polarisation des faisceaux maître 17 et esclave 18, respectivement.

Lors de la traversée du matériau de porte optique 11 par le faisceau esclave 18, ce dernier est modulé en phase par l'impulsion 14 du faisceau maître 17. La modulation de la phase du faisceau esclave 18 entraine une modification instantanée de la polarisation du faisceau esclave 18.

Une lame biréfringente 45 est disposée en aval du matériau de porte optique 11, sur le trajet du faisceau esclave 18 sortant du matériau de porte optique 11. Cette lame biréfringente 45 permet de manipuler la polarisation du faisceau esclave 18 sortant du matériau de porte optique 11 de manière à orienter cette polarisation par rapport à un cube polariseur 46 disposé en aval de la lame biréfringente 45. Ce cube polariseur 46 permet de réfléchir la polarisation transverse électrique du faisceau esclave 18 sortant du matériau de porte optique 11. L'élément 47 représente l'état de polarisation réfléchie par le cube polariseur 46.

On obtient en sortie du cube polariseur 46 une impulsion ultracourte 20 qui est superposée temporellement à l'impulsion 21 du faisceau maître 17 sortant du matériau de porte optique 11. La flèche 16 renseigne sur l'état de polarisation du faisceau esclave 18 en sortie du cube polariseur 46.

En variante, la lame biréfringente 45 et le cube polariseur 46 sont remplacés par tout élément permettant de manipuler et projeter la polarisation du faisceau esclave 18 selon un axe de manière à rejeter la portion du faisceau esclave 18 dont la polarisation n'est pas modulée. Le cube polariseur 46 peut par exemple être remplacé par un polariseur linéaire.

Des miroirs 19 sont configurés de manière à diriger le faisceau maître 17 en entrée et en sortie du matériau de porte optique 11.

Le faisceau maître 17 a par exemple une longueur d'onde centrale centrée sur 800 nm et présente une impulsion 14 d'une durée de 15 picosecondes en amont du matériau de porte optique 11.

Le faisceau esclave 18 a par exemple une longueur d'onde centrale centrée sur 1064 nm et présente, en amont du matériau de porte optique 11, une impulsion 15 d'une durée plus longue que l'impulsion 14 du faisceau maître 17.

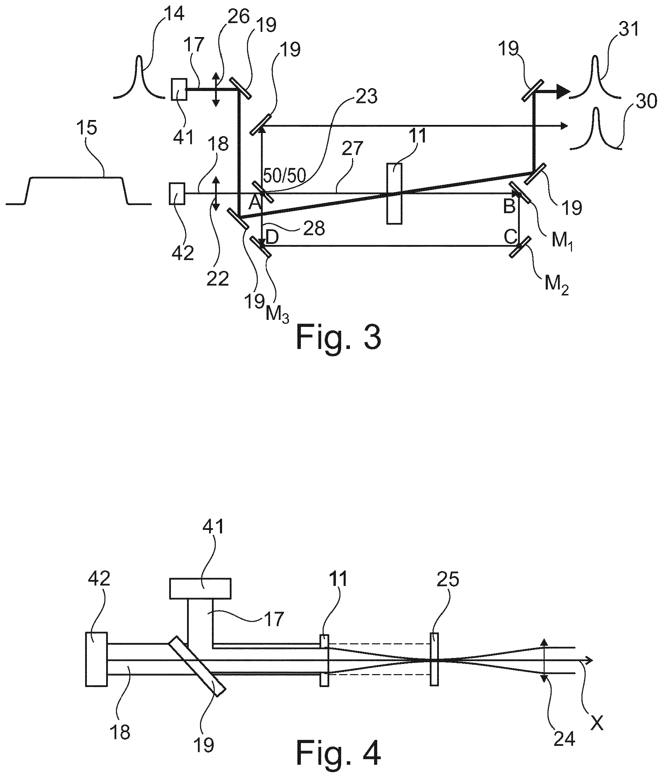

On a représenté à la figure 3 un autre exemple d'installation selon l'invention comportant, en amont du matériau de porte optique 11, une première source laser 41 générant une impulsion 14 d'un faisceau maître 17 et une deuxième source laser 42 générant une impulsion 15 d'un faisceau esclave 18. Les faisceaux maître 17 et esclave 18 sont polarisés linéairement en amont du matériau de porte optique 11 et leur état, i.e. leur direction, de polarisation est identique. Les faisceaux maître 17 et esclave 18 sont polarisés parallèlement en amont du matériau de porte optique 11, comme illustré par les flèches 26 et 27 qui renseignent sur l'état de polarisation des faisceaux maître 17 et esclave 18, respectivement.

Le dispositif comporte un interféromètre de Sagnac comportant une lame semi-réfléchissante 23 qui est disposée sur le trajet du faisceau esclave 18, à 45° de sa direction de propagation, et des miroirs M1, M2 et M3.

Le faisceau esclave 18 est dirigé vers l'interféromètre de Sagnac au point d'entrée A, au niveau duquel la lame semi-réfléchissante 23 permet de diviser le faisceau esclave 18 en deux faisceaux, l'un réfracté 27 et l'autre réfléchi 28.

Les miroirs M1, M2 et M3 permettent de diriger le faisceau réfracté 27 suivant le trajet optique ABCDA et le faisceau réfléchi 28 suivant le trajet optique ADCBA.

Les faisceaux réfracté 27 et réfléchi 28 traversent le matériau de porte optique 11 dans des directions opposées et sont recombinés après traversée de celui-ci.

On obtient en sortie du matériau de porte optique 11 une impulsion ultracourte 30 qui est superposée temporellement à l'impulsion 31 du faisceau maître 17 sortant du matériau de porte optique 11.

Des miroirs 19 sont configurés de manière à diriger d'une part le faisceau maître 17 à travers le matériau de porte optique 11 pour produire un effet Kerr et d'autre part les faisceaux maître et esclave en sortie du matériau de porte optique 11.

On a représenté à la figure 4 un autre exemple d'installation selon l'invention. Le faisceau esclave 18 généré par la deuxième source laser 42 et le faisceau maître 17 généré par la première source laser 41 sont dirigés à travers le matériau de porte optique 11. Un miroir 19 permet de diriger le faisceau maître 17 à travers le matériau de porte optique 11. Ce miroir 19 peut être dichroïque. Lors de la traversée du matériau de porte optique 11 par le faisceau esclave 18, ce dernier est modulé en phase par le faisceau maître 17. La modulation de la phase du faisceau esclave 18 entraine une modification instantanée de la divergence d'une partie au moins du faisceau esclave 18. Un filtre spatial 25 est disposé en aval du matériau de porte optique 11, sur le trajet du faisceau esclave 18 sortant du matériau de porte optique 11.

Le filtre spatial 25 peut être un orifice, notamment de forme circulaire. Le diamètre de l'orifice peut être compris entre 5 et 500 µm.

Le filtre spatial 25 est configuré de manière à bloquer la partie du faisceau esclave 18 n'ayant pas subi de modification instantanée de la divergence. Une lentille convergente 24 est disposée en aval du filtre spatial 25 sur le trajet du faisceau esclave 18 sortant du filtre spatial 25. Les rayons du faisceau esclave 18 passant par le foyer objet de la lentille 24 et traversant cette dernière sortent parallèlement à l'axe optique X.

Les exemples d'installations selon l'invention représentés aux figures 2 à 4 peuvent être utilisés en tant que système de synchronisation temporelle 6 de la figure 1 pour synchroniser temporellement la source pompe 5 et la source signal 1 d'un amplificateur OPCPA.

Le terme « comportant » doit se comprendre avec son acceptation courante, c'est-à-dire comme étant synonyme de « comprenant au moins un », sauf si le contraire est spécifié.

## Revendications

1. Procédé de génération d'impulsions (20 ; 30) ultracourtes, dans lequel :
- on dirige à travers un matériau de porte optique (11) un faisceau maître (17) présentant des impulsions (14) ultracourtes et au moins un faisceau esclave (18), l'intensité du faisceau esclave (18) en amont du matériau de porte optique (11) étant plus faible que celle du faisceau maître (17) en amont du matériau de porte optique (11), le matériau de porte optique (11) et les impulsions (14) du faisceau maître (17) étant choisis de telle sorte à induire un effet Kerr lors de la traversée du matériau de porte optique (11) par le faisceau maître (17), l'effet Kerr produisant une modulation de la phase du faisceau esclave (18) en lien avec les impulsions (14) du faisceau maître (17) lors de la traversée du matériau de porte optique (11) par le faisceau esclave (18), et
- on transforme la modulation de la phase du faisceau esclave (18) en une modulation de l'amplitude de celui-ci à l'aide d'un dispositif optique complémentaire, de façon à générer un faisceau esclave (18) en aval du matériau de porte optique (11) présentant des impulsions (20 ; 30) ultracourtes, de sorte que les impulsions (20 ; 30) ultracourtes du faisceau esclave (18) générées en aval du matériau de porte optique (11) et les impulsions (21) du faisceau maître (17) en aval du matériau de porte optique (11) se superposent temporellement, la précision de cette synchronisation temporelle étant de préférence inférieure ou égale à 20 fs.
- on utilise le faisceau maître en aval du matériau de porte optique comme faisceau signal d'un amplificateur paramétrique optique d'impulsions à dérive de fréquence, OPCPA, et on utilise le faisceau esclave en aval du matériau de porte optique comme faisceau de pompe pour ledit amplificateur OPCPA.

2. Procédé selon la revendication 1, le faisceau esclave (18) en amont du matériau de porte optique (11) étant continu ou impulsionnel, de préférence impulsionnel.

3. Procédé selon la revendication 1 ou 2, les impulsions (14) des faisceaux maître (17) et esclave (18) en amont du matériau de porte optique (11) se superposant temporellement, cette superposition étant de préférence obtenue au moyen d'une synchronisation électronique assurant une précision inférieure ou égale à 500 ps, mieux inférieure ou égale à 100 ps, et encore mieux inférieure ou égale à 10 ps.

4. Procédé selon l'une quelconque des revendications précédentes, les faisceaux maître (17) et esclave (18) présentant des longueurs d'onde centrales différentes, le faisceau maître (17) ayant de préférence une longueur d'onde centrale centrée sur 800 nm, et/ou le faisceau esclave (18) ayant de préférence une longueur d'onde centrale centrée sur 1064 nm.

5. Procédé selon l'une quelconque des revendications précédentes, la modulation de la phase du faisceau esclave (18) par les impulsions (14) du faisceau maître (17) lors de la traversée du matériau de porte optique (11) par le faisceau esclave (18) étant instantanée ou s'effectuant avec un retard inférieur ou égal à 20 fs, mieux inférieur ou égal à 10 fs, et encore mieux inférieur ou égal à 5 fs.

6. Procédé selon l'une quelconque des revendications 1 à 5, la modulation de la phase du faisceau esclave (18) par effet Kerr s'accompagnant d'une modulation de sa polarisation à la traversée du matériau de porte optique (11) par le faisceau esclave (18) lorsque les faisceaux maître (17) et esclave (18) en entrée du matériau de porte optique (11) sont polarisés différemment, le dispositif optique complémentaire comportant des moyens d'ajustement de l'état de polarisation du faisceau esclave (18) en amont du matériau de porte optique (11) et un polariseur aval (46) en aval du matériau de porte optique (11), croisé avec la polarisation du faisceau esclave (18) en entrée du matériau de porte optique, pour bloquer la partie non modulée en polarisation du faisceau esclave (18).

7. Procédé selon l'une quelconque des revendications 1 à 5, le dispositif optique complémentaire comportant un interféromètre configuré pour faire interférer au moins un faisceau esclave (18) ayant traversé le matériau de porte optique (11) avec au moins un autre faisceau issu de la même source que le faisceau esclave (18) afin de produire une modulation d'amplitude du faisceau esclave (18), l'interféromètre étant de préférence un interféromètre de Sagnac dans lequel le faisceau esclave (18) est séparé en deux faisceaux (27 ; 28) se propageant dans des directions opposées à travers le matériau de porte optique (11) et recombinés après traversée de celui-ci.

8. Procédé selon l'une quelconque des revendications 1 à 5, la modulation de la phase du faisceau esclave (18) par effet Kerr s'accompagnant d'une modulation de sa divergence à la traversée du matériau de porte optique (11) par le faisceau esclave (18) en présence d'un gradient spatial, notamment radial, d'intensité du faisceau maître (17) au sein du matériau de porte optique (11), le dispositif optique complémentaire comportant un filtre spatial (25) en aval du matériau de porte optique (11) pour bloquer la partie non modulée en divergence du faisceau esclave (18).

9. Procédé selon l'une quelconque des revendications précédentes, dans lequel le faisceau esclave (18), après traversée du matériau de porte optique (11), est amplifié au sein d'un amplificateur laser.

10. Procédé selon l'une quelconque des revendications précédentes, les impulsions (20 ; 30) ultracourtes du faisceau esclave (18) générées en aval du matériau de porte optique (11) et les impulsions (21) du faisceau maître (17) en aval du matériau de porte optique (11) se superposant temporellement, la précision de cette synchronisation temporelle étant inférieure ou égale à 20 fs, mieux inférieure ou égale à 10 fs, et encore mieux inférieure ou égale à 5 fs.

11. Installation pour générer des impulsions (20 ; 30) ultracourtes, notamment pour la mise en oeuvre du procédé selon l'une quelconque des revendications précédentes, comportant :
- une première source laser (41) configurée pour générer un faisceau maître (17) présentant des impulsions (14) ultracourtes,
- au moins une deuxième source laser (42) configurée pour générer au moins un faisceau esclave (18),
- un matériau de porte optique (11) disposé sur le trajet des faisceaux maître (17) et esclave (18), l'intensité du faisceau esclave (18) en amont du matériau de porte optique (11) étant plus faible que celle du faisceau maître (17) en amont du matériau de porte optique (11), le matériau de porte optique (11) et les impulsions (14) du faisceau maître (17) étant choisis de telle sorte à induire un effet Kerr lors de la traversée du matériau de porte optique (11) par le faisceau maître (17), l'effet Kerr produisant une modulation de la phase du faisceau esclave (18) en lien avec les impulsions (14) du faisceau maître (17) lors de la traversée du matériau de porte optique (11) par le faisceau esclave (18),
- un dispositif optique complémentaire pour transformer la modulation de la phase du faisceau esclave (18) en une modulation de l'amplitude de celui-ci, de sorte que les impulsions (20 ; 30) ultracourtes du faisceau esclave (18) générées en aval du matériau de porte optique (11) et les impulsions (21) du faisceau maître (17) en aval du matériau de porte optique (11) se superposent temporellement, la précision de cette synchronisation temporelle étant de préférence inférieure ou égale à 20 fs, et
- un amplificateur OPCPA configuré pour utiliser comme faisceau signal le faisceau maître en aval du matériau de porte optique et comme faisceau pompe le faisceau esclave en aval du matériau de porte optique.

12. Installation selon la revendication 11, la deuxième source laser (42) étant de type Single Longitudinal Mode, SLM, et/ou l'installation comportant des moyens d'amplification optique pour amplifier le faisceau esclave (18) en aval du matériau de porte optique (11).

13. Installation selon la revendication 11 ou 12, la modulation de la phase du faisceau esclave (18) par effet Kerr s'accompagnant d'une modulation de sa polarisation à la traversée du matériau de porte optique (11) par le faisceau esclave (18) lorsque les faisceaux maître (17) et esclave (18) en entrée du matériau de porte optique (11) sont polarisés différemment, le dispositif optique complémentaire comportant des moyens d'ajustement de l'état de polarisation du faisceau esclave (18) en amont du matériau de porte optique (11) et un polariseur aval (46) en aval du matériau de porte optique (11), croisé avec la polarisation du faisceau esclave (18) en entrée du matériau de porte optique (11), pour bloquer la partie non modulée en polarisation du faisceau esclave (18).

14. Installation selon la revendication 11 ou 12, le dispositif optique complémentaire comportant un interféromètre configuré pour faire interférer au moins un faisceau esclave (18) ayant traversé le matériau de porte optique (11) avec au moins un autre faisceau issu de la même source que le faisceau esclave (18) afin de produire une modulation d'amplitude du faisceau esclave (18), le dispositif optique complémentaire comportant de préférence un interféromètre de Sagnac dans lequel le faisceau esclave (18) est séparé en deux faisceaux (27 ; 28) se propageant dans des directions opposées à travers le matériau de porte optique (11) et recombinés après traversée de celui-ci.

15. Installation selon la revendication 11 ou 12, la modulation de la phase du faisceau esclave (18) par effet Kerr s'accompagnant d'une modulation de sa divergence à la traversée du matériau de porte optique (11) par le faisceau esclave (18) en présence d'un gradient spatial, notamment radial, d'intensité du faisceau maître (17) au sein du matériau de porte optique (11), le dispositif optique complémentaire comportant un filtre spatial (25) en aval du matériau de porte optique (11) pour bloquer la partie non modulée en divergence du faisceau esclave (18).

## Patentansprüche

1. Verfahren zur Erzeugung von ultrakurzen Impulsen (20; 30), bei dem:
- ein Master-Strahl (17) mit ultrakurzen Impulsen (14) und mindestens ein Slave-Strahl (18) durch ein optisches Gattermaterial (11) geleitet werden, wobei die Intensität des Slave-Strahls (18) vor dem optischen Gattermaterial (11) geringer ist als die des Master-Strahls (17) vor dem optischen Gattermaterial (11), wobei das optische Gattermaterial (11) und die Impulse (14) des Master-Strahls (17) so gewählt sind, dass sie beim Durchqueren des Master-Strahls (17) durch das optische Gattermaterial (11) einen Kerr-Effekt induzieren, wobei der Kerr-Effekt eine Phasenmodulation des Slave-Strahls (18) in Verbindung mit den Impulsen (14) des Master-Strahls (17) beim Durchqueren des Slave-Strahls (18) durch das optische Gattermaterial (11) erzeugt, und
- die Phasenmodulation des Slave-Strahls (18) mit Hilfe einer komplementären optischen Vorrichtung in eine Amplitudenmodulation desselben umgewandelt wird, so dass nach dem optischen Gattermaterial (11) ein Slave-Strahl (18) erzeugt wird, der ultrakurze Impulse (20; 30) aufweist, so dass sich die ultrakurzen Impulse (20 ; 30) des Slave-Strahls (18), die nach dem optischen Gattermaterial (11) erzeugt werden, und die Impulse (21) des Master-Strahls (17) nach dem optischen Gattermaterial (11) zeitlich überlagern, wobei die Genauigkeit dieser zeitlichen Synchronisation vorzugsweise kleiner oder gleich 20 fs ist
- der Master-Strahl nach dem optischen Gattermaterial als Signalstrahl eines parametrischen optischen Frequenzdrift-Impulsverstärkers, 0PCPA, verwendet wird, und der Slave-Strahl nach dem optischen Gattermaterial als Pumpstrahl für den 0PCPA-Verstärker verwendet wird.

2. Verfahren nach Anspruch 1, in dem der Slave-Strahl (18) vor dem optischen Gattermaterial (11) kontinuierlich oder impulsförmig, vorzugsweise impulsförmig, ist.

3. Verfahren nach Anspruch 1 oder 2, in dem sich die Impulse (14) des Master- (17) und Slave-Strahls (18) vor dem optischen Gattermaterial (11) zeitlich überlagern, wobei diese Überlagerung vorzugsweise mittels einer elektronischen Synchronisation erreicht wird, die eine Genauigkeit von weniger als oder gleich 500 ps, besser weniger als oder gleich 100 ps und noch besser weniger als oder gleich 10 ps gewährleistet.

4. Verfahren nach einem der vorhergehenden Ansprüche, in dem der Master-Strahl (17) und der Slave-Strahl (18) unterschiedliche Mittenwellenlängen aufweisen, wobei der Master-Strahl (17) vorzugsweise eine Mittenwellenlänge aufweist, die auf 800 nm zentriert ist, und/oder der Slave-Strahl (18) vorzugsweise eine Mittenwellenlänge aufweist, die auf 1064 nm zentriert ist.

5. Verfahren nach einem der vorhergehenden Ansprüche, in dem die Phasenmodulation des Slave-Strahls (18) durch die Impulse (14) des Master-Strahls (17) beim Durchgang des Slave-Strahls (18) durch das optische Gattermaterial (11) augenblicklich erfolgt oder mit einer Verzögerung von weniger als oder gleich 20 fs, besser weniger als oder gleich 10 fs, und noch besser weniger als oder gleich 5 fs erfolgt.

6. Verfahren nach einem der Ansprüche 1 bis 5, in dem die Phasenmodulation des Slave-Strahls (18) durch den Kerr-Effekt mit einer Modulation seiner Polarisation bei der Durchquerung des optischen Gattermaterials (11) durch den Slave-Strahl (18) einhergeht, wenn der Master-Strahl (17) und der Slave-Strahl (18) am Eingang des optischen Gattermaterials (11) unterschiedlich polarisiert sind, und wobei die komplementäre optische Vorrichtung Mittel zur Einstellung des Polarisationszustands des Slave-Strahls (18) vor dem optischen Gattermaterial (11) und einen dem optischen Gattermaterial (11) nachgestellten Polarisator (46) umfasst, der mit der Polarisation des Slave-Strahls (18) am Eingang des optischen Gattermaterials gekreuzt ist, um den nicht polarisationsmodulierten Teil des Slave-Strahls (18) zu blockieren.

7. Verfahren nach einem der Ansprüche 1 bis 5, in dem die komplementäre optische Vorrichtung ein Interferometer umfasst, das so konfiguriert ist, dass es mindestens einen Slave-Strahl (18), der das optische Gattermaterial (11) durchquert hat, mit mindestens einem anderen Strahl interferieren lässt, der aus derselben Quelle wie der Slave-Strahl (18) stammt, um eine Amplitudenmodulation des Slave-Strahls (18) zu erzeugen, wobei das Interferometer vorzugsweise ein Sagnac-Interferometer ist, bei dem der Slave-Strahl (18) in zwei Strahlen (27 ; 28) geteilt wird, die sich in entgegengesetzte Richtungen durch das optische Gattermaterial (11) ausbreiten und nach dessen Durchquerung wieder rekombiniert werden.

8. Verfahren nach einem der Ansprüche 1 bis 5, bei dem die Phasenmodulation des Slave-Strahls (18) durch den Kerr-Effekt mit einer Modulation seiner Divergenz beim Durchqueren des Slave-Strahls (18) des optischen Gattermaterials (11) bei Vorhandensein eines räumlichen, insbesondere radialen Gradienten einhergeht, mit der gleichen Intensität wie der Master-Strahl (17) innerhalb des optischen Gattermaterials (11), wobei die komplementäre optische Vorrichtung einen räumlichen Filter (25) nach dem optischen Gattermaterial (11) umfasst, um den nicht divergenzmodulierten Teil des Slave-Strahls (18) zu blockieren.

9. Verfahren nach einem der vorhergehenden Ansprüche, bei dem der Slave-Strahl (18) nach dem Durchqueren des optischen Gattermaterials (11) innerhalb eines Laserverstärkers verstärkt wird.

10. Verfahren nach einem der vorhergehenden Ansprüche, bei dem die ultrakurzen Impulse (20; 30) des Slave-Strahls (18), die nach dem optischen Gattermaterial (11) erzeugt werden, und die Impulse (21) des Master-Strahls (17) nach dem optischen Gattermaterial (11) sich zeitlich überlagern, wobei die Genauigkeit dieser zeitlichen Synchronisation kleiner oder gleich 20 fs, besser kleiner oder gleich 10 fs und noch besser kleiner oder gleich 5 fs ist.

11. Anlage zur Erzeugung von ultrakurzen Impulsen (20; 30), insbesondere zur Durchführung des Verfahrens nach einem der vorhergehenden Ansprüche, umfassend:
- eine erste Laserquelle (41), die so konfiguriert ist, dass sie einen Master-Strahl (17) mit ultrakurzen Impulsen (14) erzeugt,
- mindestens eine zweite Laserquelle (42), die so konfiguriert ist, dass sie mindestens einen Slave-Strahl (18) erzeugt,
- ein optisches Gattermaterial (11), das im Strahlengang des Master- (17) und des Slave-Strahls (18) angeordnet ist, wobei die Intensität des Slave-Strahls (18) vor dem optischen Gattermaterial (11) geringer ist als die des Master-Strahls (17) vor dem optischen Gattermaterial (11), wobei das optische Gattermaterial (11) und die Impulse (14) des Master-Strahls (17) so gewählt sind, dass sie beim Durchgang des Master-Strahls (17) durch das optische Gattermaterial (11) einen Kerr-Effekt induzieren, wobei der Kerr-Effekt eine Phasenmodulation des Slave-Strahls (18) in Verbindung mit den Impulsen (14) des Master-Strahls ( 17) beim Durchgang des Slave-Strahls (18) durch das optische Gattermaterial (11) erzeugt,
- eine komplementäre optische Vorrichtung zur Umwandlung der Phasenmodulation des Slave-Strahls (18) in eine Amplitudenmodulation, so dass sich die ultrakurzen Impulse (20; 30) des Slave-Strahls (18), die nach dem optischen Gattermaterial (11) erzeugt werden, und die Impulse (21) des Master-Strahls (17) nach dem optischen Gattermaterial (11) zeitlich überlagern, wobei die Genauigkeit dieser zeitlichen Synchronisierung vorzugsweise kleiner oder gleich 20 fs ist, und
- einen 0PCPA-Verstärker, der so konfiguriert ist, dass er als Signalstrahl den Master-Strahl nach dem optischen Gattermaterial und als Pumpstrahl den Slave-Strahl nach dem optischen Gattermaterial verwendet.

12. Anlage nach Anspruch 11, in der die zweite Laserquelle (42) vom Typ Single Longitudinal Mode, SLM ist, und/oder die Anlage optische Verstärkungsmittel zum Verstärken des Slave-Strahls (18) nach dem optischen Gattermaterial (11) umfasst.

13. Anlage nach Anspruch 11 oder 12, in der die Phasenmodulation des Slave-Strahls (18) durch den Kerr-Effekt mit einer Polarisationsmodulation beim Durchqueren des Slave-Strahls (18) des optischen Gattermaterials (11) einhergeht, wenn der Master-Strahl (17) und der Slave-Strahl (18) am Eingang des optischen Gattermaterials (11) unterschiedlich polarisiert sind, wobei die komplementäre optische Vorrichtung Mittel zur Einstellung des Polarisationszustands des Slave-Strahls (18) vor dem optischen Gattermaterial (11) und einen nachgestellten Polarisator (46) nach dem optischen Gattermaterial (11) umfasst, der mit der Polarisation des Slave-Strahls (18) am Eingang des optischen Gattermaterials (11) gekreuzt ist, um den nicht polarisationsmodulierten Teil des Slave-Strahls (18) zu blockieren.

14. Anlage nach Anspruch 11 oder 12, in der die komplementäre optische Vorrichtung ein Interferometer umfasst, das so konfiguriert ist, dass es mindestens einen Slave-Strahl (18), der das optische Gattermaterial (11) durchquert hat, mit mindestens einem anderen Strahl interferieren lässt, der aus derselben Quelle wie der Slave-Strahl (18) stammt, um eine Amplitudenmodulation des Slave-Strahls (18) zu erzeugen, wobei die komplementäre optische Vorrichtung vorzugsweise ein Sagnac-Interferometer umfasst, bei dem der Slave-Strahl (18) in zwei Strahlen (27 ; 28) geteilt wird, die sich in entgegengesetzte Richtungen durch das optische Gattermaterial (11) ausbreiten und nach dessen Durchquerung wieder rekombiniert werden.

15. Anlage nach Anspruch 11 oder 12, in der die Phasenmodulation des Slave-Strahls (18) durch den Kerr-Effekt mit einer Divergenzmodulation beim Durchqueren des Slave-Strahls (18) des optischen Gattermaterials (11) bei Vorhandensein eines räumlichen, insbesondere radialen Gradienten einhergeht, mit der gleichen Intensität wie der Master-Strahl (17) innerhalb des optischen Gattermaterials (11), wobei die komplementäre optische Vorrichtung einen räumlichen Filter (25) nach dem optischen Gattermaterial (11) umfasst, um den nicht divergenzmodulierten Teil des Slave-Strahls (18) zu blockieren.

## Claims

1. A method for generating ultrashort pulses (20; 30), wherein:
- a master beam (17) having ultrashort pulses (14) and at least one slave beam (18) are directed through an optical gate material (11), the intensity of the slave beam (18) upstream of the optical gate material (11) being lower than that of the master beam (17) upstream of the optical gate material (11), the optical gate material (11) and the pulses (14) of the master beam (17) being chosen so as to induce a Kerr effect when the master beam (17) passes through the optical gate material (11), the Kerr effect producing a modulation of the phase of the slave beam (18) in association with the pulses (14) of the master beam (17) when the slave beam (18) passes through the optical gate material (11), and
- the modulation of the phase of the slave beam (18) is transformed into a modulation of the amplitude thereof using a complementary optical device, so as to generate a slave beam (18) downstream of the optical gate material (11) having ultrashort pulses (20; 30), so that the ultrashort pulses (20; 30) of the slave beam (18) generated downstream of the optical gate material (11) and the pulses (21) of the master beam (17) downstream of the optical gate material (11) overlap temporally, the precision of this temporal synchronization being preferably less than or equal to 20 fs,
- the master beam downstream of the optical gate material is used as the signal beam of an optical parametric pulse amplifier with frequency drift, OPCPA, and the slave beam downstream of the optical gate material is used as the pump beam for said OPCPA amplifier.

2. The method as claimed in claim 1, the slave beam (18) upstream of the optical gate material (11) being continuous or pulsed, preferably pulsed.

3. The method as claimed in claim 1 or 2, the pulses (14) of the master (17) and slave (18) beams upstream of the optical gate material (11) being superimposed temporally, this superimposition being preferably obtained by means of an electronic synchronization ensuring a precision less than or equal to 500 ps, better less than or equal to 100 ps, and even better less than or equal to 10 ps.

4. The method as claimed in any one of the preceding claims, the master (17) and slave (18) beams having different central wavelengths, the master beam (17) preferably having a central wavelength centered on 800 nm, and/or the slave beam (18) preferably having a central wavelength centered on 1064 nm.

5. The method as claimed in any one of the preceding claims, the modulation of the phase of the slave beam (18) by the pulses (14) of the master beam (17) when the slave beam (18) passes through the optical gate material (11) being instantaneous or being performed with a delay less than or equal to 20 fs, better less than or equal to 10 fs, and even better less than or equal to 5 fs.

6. The method as claimed in any one of claims 1 to 5, the modulation of the phase of the slave beam (18) by Kerr effect being accompanied by a modulation of its polarization when the slave beam (18) passes through the optical gate material (11) when the master (17) and slave (18) beams at the input of the optical gate material (11) are polarized differently, the complementary optical device comprising means for adjusting the state of polarization of the slave beam (18) upstream of the optical gate material (11) and a downstream polarizer (46) downstream of the optical gate material (11), crossed with the polarization of the save beam (18) at the input of the optical gate material, to block the part of the slave beam (18) that is not polarization-modulated.

7. The method as claimed in any one of claims 1 to 5, the complementary optical device comprising an interferometer configured to make at least one slave beam (18) having passed through the optical gate material (11) interfere with at least one other beam from the same source as the slave beam (18) in order to produce an amplitude modulation of the slave beam (18), the interferometer preferably being a Sagnac interferometer in which the slave beam (18) is separated into two beams (27; 28) propagating in opposite directions through the optical gate material (11) and recombined after having passed through the latter.

8. The method as claimed in any one of claims 1 to 5, the modulation of the phase of the slave beam (18) by Kerr effect being accompanied by a modulation of its divergence when the slave beam (18) passes through the optical gate material (11) in the presence of a spatial gradient, notably radial, of intensity of the master beam (17) within the optical gate material (11), the complementary optical device comprising a spatial filter (25) downstream of the optical gate material (11) to block the part of the slave beam (18) that is not divergence-modulated.

9. The method as claimed in any one of the preceding claims, wherein the slave beam (18), after having passed through the optical gate material (11), is amplified within a laser amplifier.

10. The method as claimed in any one of the preceding claims, the ultrashort pulses (20; 30) of the slave beam (18) generated downstream of the optical gate material (11) and the pulses (21) of the master beam (17) downstream of the optical gate material (11) being superimposed temporally, the precision of this temporal synchronization being less than or equal to 20 fs, better less than or equal to 10 fs, and even better less than or equal to 5 fs.

11. An installation for generating ultrashort pulses (20; 30), notably for implementing the method as claimed in any one of the preceding claims, comprising:
- a first laser source (41) configured to generate a master beam (17) having ultrashort pulses (14),
- at least one second laser source (42) configured to generate at least one slave beam (18),
- an optical gate material (11) disposed on the path of the master (17) and slave (18) beams, the intensity of the slave beam (18) upstream of the optical gate material (11) being lower than that of the master beam (17) upstream of the optical gate material (11), the optical gate material (11) and the pulses (14) of the master beam (17) being chosen so as to induce a Kerr effect when the master beam (17) passes through the optical gate material (11), the Kerr effect producing a modulation of the phase of the slave beam (18) in association with the pulses (14) of the master beam (17) when the slave beam (18) passes through the optical gate material (11),
- a complementary optical device for transforming the modulation of the phase of the slave beam (18) into a modulation of the amplitude thereof, so that the ultrashort pulses (20; 30) of the slave beam (18) generated downstream of the optical gate material (11) and the pulses (21) of the master beam (17) downstream of the optical gate material (11) overlap temporally, the precision of this temporal synchronization being preferably less than or equal to 20 fs, and
- an OPCPA amplifier configured to use as signal beam the master beam downstream of the optical gate material and as pump beam the slave beam downstream of the optical gate material.

12. The installation as claimed in claim 11, the second laser source (42) being of Signal Longitudinal Mode, SLM, and/or the installation comprising optical amplification means for amplifying the slave beam (18) downstream of the optical gate material (11).

13. The installation as claimed in claim 11 or 12, the modulation of the phase of the slave beam (18) by Kerr effect being accompanied by a modulation of its polarization when the slave beam (18) passes through the optical gate material (11) when the master (17) and slave (18) beams at the input of the optical gate material (11) are polarized differently, the complementary optical device comprising means for adjusting the state of polarization of the slave beam (18) upstream of the optical gate material (11) and a downstream polarizer (46) downstream of the optical gate material (11), crossed with the polarization of the slave beam (18) at the input of the optical gate material (11), to block the part of the slave beam (18) that is not polarization-modulated.

14. The installation as claimed in claim 11 or 12, the complementary optical device comprising an interferometer configured to make at least one slave beam (18) having passed through the optical gate material (11) interfere with at least one other beam from the same source as the slave beam (18) in order to produce an amplitude modulation of the slave beam (18), the complementary optical device preferably comprising a Sagnac interferometer in which the slave beam (18) is separated into two beams (27; 28) propagating in opposite directions through the optical gate material (11) and recombined after having passed through the latter.

15. The installation as claimed in claim 11or 12, the modulation of the phase of the slave beam (18) by Kerr effect being accompanied by a modulation of its divergence when the slave beam (18) passes through the optical gate material (11) in the presence of a spatial gradient, notably radial, of intensity of the master beam (17) within the optical gate material (11), the complementary optical device comprising a spatial filter (25) downstream of the optical gate material (11) to block the part of the slave beam (18) that is not divergence-modulated.
